# EUROPEAN PATENT APPLICATION

(11) **EP 4 838 607 A1**
(43) Date of publication of application: **11.11.2026**
(21) Application number: 24915141.6
(22) Date of filing: 24.12.2024
(51) Int. Cl.: H01M 10/0567, H01M 50/491, H01M 50/449, H01M 50/431, H01M 50/426, H01M 10/0525

(54) **ELECTROCHEMICAL APPARATUS AND ELECTRONIC APPARATUS**

(30) Priority: 03.01.2024 CN 202410009897
(71) Applicant: Ningde Amperex Technology Limited, Ningde, Fujian 352100 (CN)
(72) Inventor: LIU, Jianyu, Ningde, Fujian 352100 (CN); ZHANG, Shan, Ningde, Fujian 352100 (CN); TANG, Chao, Ningde, Fujian 352100 (CN)
(74) Representative: Kraus & Lederer PartGmbB
(86) International application number: PCT/CN2024/141753
(87) International publication number: WO 2025/145926

(57) **Abstract**

This application provides an electrochemical apparatus and an electronic apparatus. The electrochemical apparatus includes an electrolyte, a separator, a positive electrode sheet, and a negative electrode sheet. The electrolyte includes a compound represented by formula (I), where based on a mass of the electrolyte, a mass percentage of the compound represented by formula (I) is A%, and 30 ≤ A ≤ 80. The separator includes a porous substrate and a porous coating disposed on at least one side of the porous substrate, and a porosity of the separator is 25% to 35%. In this application, the separator structure and the electrolyte components are adjusted and combined, and the synergistic effect of the two improves the OCPD cycling performance of the electrochemical apparatus.

## Description

This application claims priority to Chinese Patent Application No. 202410009897.8, filed with the China National Intellectual Property Administration on January 3, 2024 and entitled "ELECTROCHEMICAL APPARATUS AND ELECTRONIC APPARATUS", which is incorporated herein by reference in its entirety.

### TECHNICAL FIELD

This application relates to the field of electrochemical technology, and in particular, to an electrochemical apparatus and an electronic apparatus.

### BACKGROUND

Electrochemical apparatuses, such as lithium-ion batteries, have advantages such as high energy storage density, high open-circuit voltage, low self-discharge rate, long cycle life, and good safety, and are widely used in various fields such as portable energy storage, electronic devices, and electric vehicles. With the rapid development of lithium-ion batteries in consumer terminals and other fields, the market demand for the performance of lithium-ion batteries is also increasing, such as OCPD (one cylce per day) cycling performance. The test process of the cycling performance simulates the usage habits of clients and is closer to real usage scenarios. However, the OCPD cycling process has high requirements for lithium-ion batteries, and the OCPD cycling performance of existing lithium-ion batteries is not ideal. Therefore, how to improve the OCPD cycling performance of lithium-ion batteries has become a technical problem to be solved urgently.

### SUMMARY

This application is intended to provide an electrochemical apparatus and an electronic apparatus so as to improve the OCPD (one cylce per day) cycling performance of the electrochemical apparatus. The specific technical solutions are as follows:

A first aspect of this application provides an electrochemical apparatus including an electrolyte, a separator, a positive electrode sheet, and a negative electrode sheet, where the electrolyte includes a compound represented by formula (I): 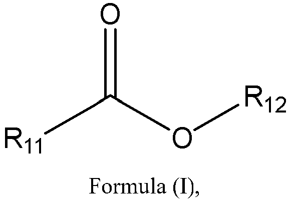 R₁₁ and R₁₂ are each independently selected from a fluorine-substituted or unsubstituted C₁ to C₁₀ alkyl, and at least one of R₁₁ or R₁₂ is fluorine-substituted; based on a mass of the electrolyte, a mass percentage of the compound represented by formula (I) is A%, and 30 ≤ A ≤ 80; and the separator includes a porous substrate and a porous coating disposed on at least one side of the porous substrate, and a porosity of the separator is 25% to 35%. In this application, the separator has a relatively low porosity, which can ensure that the separator of the electrochemical apparatus has relatively high mechanical strength, helping to reduce the probability of internal short circuit of the electrochemical apparatus during actual operating conditions, thereby improving the safety performance of the electrochemical apparatus. However, the relatively low porosity of the separator can reduce a storage space for the electrolyte, reduce a retention amount of the electrolyte, and make the electrolyte prone to depletion, thereby causing a lithium ion transport channel between a positive electrode and a negative electrode to be blocked, affecting the transport of lithium ions, and further affecting the OCPD cycling performance of the electrochemical apparatus. Since the compound represented by formula (I) has strong oxidation resistance, the oxidation reactions between a positive electrode active material and the electrolyte can be reduced, and an oxidation window of the electrolyte can be widened, allowing the electrochemical apparatus to have good positive electrode interface stability, and helping to reduce a consumption rate of the electrolyte and delay a depletion rate of the electrolyte, thereby improving the OCPD cycling performance of the electrochemical apparatus while ensuring the safety performance of the electrochemical apparatus.

In some embodiments of this application, 40 ≤ A ≤ 75. Adjusting the value of A within the above range is more conducive to exerting the effect of the compound represented by formula (I), allowing the electrochemical apparatus to have good positive electrode interface stability, and helping to further reduce the consumption rate of the electrolyte and delay the depletion rate of the electrolyte, thereby helping to further improve the OCPD cycling performance of the electrochemical apparatus while ensuring the safety performance of the electrochemical apparatus.

In some embodiments of this application, the porosity of the separator is 25% to 30%. The separator having a relatively low porosity can ensure that the separator of the electrochemical apparatus has relatively high mechanical strength, helping to further reduce the probability of internal short circuit of the electrochemical apparatus during actual operating conditions, thereby helping to further improve the safety of the electrochemical apparatus.

In some embodiments of this application, the compound represented by formula (I) includes at least one of the following compounds:

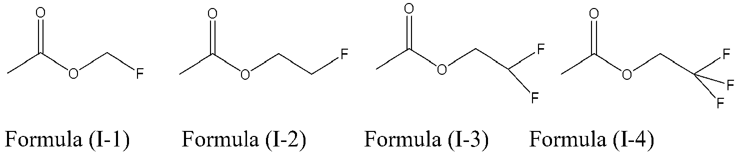

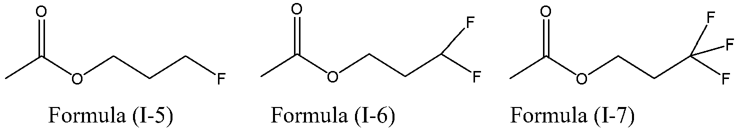

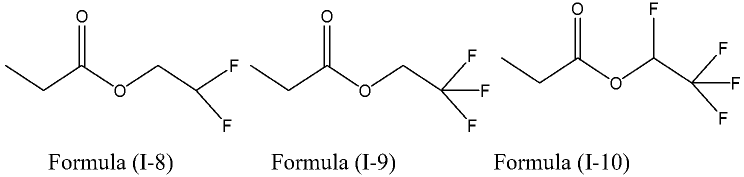

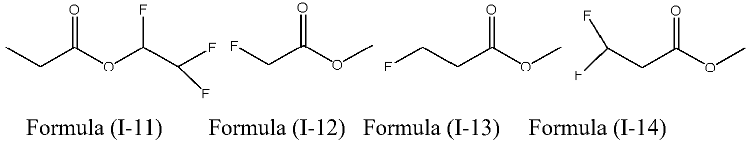

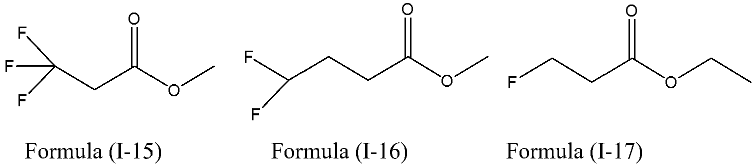

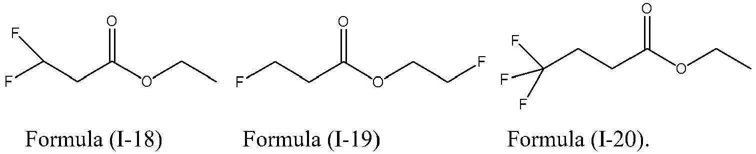

In the electrochemical apparatus of this application, the electrolyte including the compound represented by formula (I) within the above range can better exert the effect of the compound represented by formula (I), allowing the electrochemical apparatus to have good positive electrode interface stability, and helping to reduce the consumption rate of the electrolyte and delay the depletion efficiency of the electrolyte, thereby improving the OCPD cycling performance of the electrochemical apparatus while ensuring the safety performance of the electrochemical apparatus.

In some embodiments of this application, the electrolyte includes a non-fluorinated carboxylate ester, where the non-fluorinated carboxylate ester includes at least one of methyl formate, ethyl formate, methyl acetate, ethyl acetate, propyl acetate, methyl propionate, ethyl propionate, or propyl propionate; and based on the mass of the electrolyte, a mass percentage of the non-fluorinated carboxylate ester is B%, and 10 ≤ B ≤ 60. Further introducing the above types of non-fluorinated carboxylate esters into the electrolyte and adjusting the mass percentage B% thereof within the above range allow the electrolyte to have an appropriate viscosity, improve the wettability of a positive electrode interface and a negative electrode interface, and reduce polarization, thereby improving the OCPD cycling performance of the electrochemical apparatus while ensuring the safety performance of the electrochemical apparatus.

In some embodiments of this application, the electrolyte includes a cyclic carbonate, where the cyclic carbonate includes at least one of ethylene carbonate, propylene carbonate, butylene carbonate, or vinylethylene carbonate; and based on the mass of the electrolyte, a mass percentage of the cyclic carbonate is C%, and 0 ≤ C ≤ 10. Further introducing the cyclic carbonate into the electrolyte and adjusting the mass percentage C% thereof within the above range are conducive to the dissociation of a lithium salt, improve the conductivity of the electrolyte, and are also conducive to the film formation of anions of the lithium salt, adjust a solvation structure of the electrolyte, and enhance the stability of the positive electrode interface and the negative electrode interface, thereby helping to improve the OCPD cycling performance of the electrochemical apparatus while ensuring the safety performance of the electrochemical apparatus.

In some embodiments of this application, the electrolyte includes a trinitrile compound, where the trinitrile compound includes at least one of 1,3,5-pentanetricarbonitrile, 1,2,3-propanetricarbonitrile, 1,3,6-hexanetricarbonitrile, or 1,2,3-tris(2-cyanoethoxy)propane; and based on the mass of the electrolyte, a mass percentage of the trinitrile compound is D%, and 1 ≤ D ≤ 3. Further introducing the above types of trinitrile compounds into the electrolyte and adjusting the mass percentage D% thereof within the above range can further enhance the stability of the positive electrode interface, thereby helping to improve the OCPD cycling performance of the electrochemical apparatus while ensuring the safety performance of the electrochemical apparatus.

In some embodiments of this application, a coating areal density of the porous coating is 0.1 mg/1540.25 mm² to 10 mg/1540.25 mm². Adjusting the coating areal density of the porous coating within the above range allows the separator to have a relatively low porosity and allows the separator to have relatively high adhesion with the positive electrode sheet and the negative electrode sheet, helping to reduce the thickness of the electrochemical apparatus, thereby helping to allow the electrochemical apparatus to have good OCPD cycling performance and increase a volumetric energy density of the electrochemical apparatus while ensuring the safety performance of the electrochemical apparatus.

In some embodiments of this application, the porous coating includes inorganic particles and a fluorine-containing binder, where based on a mass of the porous coating, a mass ratio of the inorganic particles to the fluorine-containing binder is m, and 1 ≤ m ≤ 2. Adjusting the mass ratio m of the inorganic particles to the fluorine-containing binder within the above range allows the separator to have relatively high adhesion with the positive electrode sheet and the negative electrode sheet while exerting the effects of the inorganic particles and the fluorine-containing binder, helping to reduce the thickness of the electrochemical apparatus and ensuring that the separator has an appropriate porosity, thereby helping to allow the electrochemical apparatus to have good OCPD cycling performance and increase the volumetric energy density of the electrochemical apparatus while ensuring the safety performance of the electrochemical apparatus.

In some embodiments of this application, the inorganic particles include at least one of magnesium hydroxide, boehmite, or aluminum oxide; and the fluorine-containing binder includes a polyvinylidene fluoride-based binder, where the polyvinylidene fluoride-based binder includes at least one of polyvinylidene fluoride or polyvinylidene fluoride-hexafluoropropylene copolymer. Selecting the above types of inorganic particles can improve the high temperature resistance and heat shrinkage resistance of the separator and enhance the mechanical strength of the separator, thereby helping to improve the safety performance of the electrochemical apparatus on the basis of the electrochemical apparatus having good OCPD cycling performance. Selecting the above types of fluorine-containing binders can improve the affinity of an electrode sheet for the electrolyte and improve the wettability of the electrode sheet by the electrolyte, thereby helping to improve the OCPD cycling performance of the electrochemical apparatus while ensuring the safety performance of the electrochemical apparatus.

In some embodiments of this application, the inorganic particles are magnesium hydroxide, and its excellent flame retardant performance can further improve the high temperature resistance and heat shrinkage resistance of the separator and enhance the mechanical strength of the separator, thereby helping to further improve the safety performance of the electrochemical apparatus on the basis of the electrochemical apparatus having good OCPD cycling performance.

A second aspect of this application provides an electronic apparatus including the electrochemical apparatus provided in the first aspect of this application. The electrochemical apparatus provided in this application has good OCPD cycling performance, so that the electronic apparatus provided in this application has a long service life and good performance.

The beneficial effects of this application are as follows:
This application provides an electrochemical apparatus and an electronic apparatus. The electrochemical apparatus includes an electrolyte, a separator, a positive electrode sheet, and a negative electrode sheet, where the electrolyte includes a compound represented by formula (I); based on a mass of the electrolyte, a mass percentage of the compound represented by formula (I) is A%, and 30 ≤ A ≤ 80; and the separator includes a porous substrate and a porous coating disposed on at least one side of the porous substrate, and a porosity of the separator is 25% to 35%. In this application, the separator has a relatively low porosity, which can ensure that the separator of the electrochemical apparatus has relatively high mechanical strength, helping to reduce the probability of internal short circuit of the electrochemical apparatus during actual operating conditions, thereby improving the safety of the electrochemical apparatus. However, the relatively low porosity of the separator can reduce a storage space for the electrolyte, reduce a retention amount of the electrolyte, and make the electrolyte prone to depletion, thereby causing a lithium ion transport channel between a positive electrode and a negative electrode to be blocked, affecting the transport of lithium ions, and further affecting the OCPD cycling performance of the electrochemical apparatus. Since the compound represented by formula (I) has strong oxidation resistance, the oxidation reactions between a positive electrode active material and the electrolyte can be reduced, and an oxidation window of the electrolyte can be widened, allowing the electrochemical apparatus to have good positive electrode interface stability, and helping to reduce a consumption rate of the electrolyte and delay a depletion rate of the electrolyte, thereby improving the OCPD cycling performance of the electrochemical apparatus while ensuring the safety performance of the electrochemical apparatus.

Certainly, any product or method implementing this application does not necessarily need to achieve all the advantages described above at the same time.

### DETAILED DESCRIPTION

The technical solutions in some embodiments of this application will be clearly and completely described below. Apparently, the described embodiments are only some rather than all of these embodiments of this application. All other embodiments obtained by those skilled in the art based on this application fall within the protection scope of this application.

It should be noted that in the specific embodiments of this application, a lithium-ion battery is taken as an example of an electrochemical apparatus to explain this application, but the electrochemical apparatus of this application is not limited to the lithium-ion battery.

Compared with conventional cycling performance tests, a full-charge and full-discharge standing process is added to a process of testing the OCPD cycling performance. Therefore, higher requirements are imposed on the stability of a positive electrode interface and a negative electrode interface of an electrochemical apparatus. However, in the existing electrochemical apparatus, the stability of the positive electrode interface and the negative electrode interface is poor, so that the OCPD cycling performance cannot reach an ideal level. Based on this, this application provides an electrochemical apparatus and an electronic apparatus.

A first aspect of this application provides an electrochemical apparatus including an electrolyte, a separator, a positive electrode sheet, and a negative electrode sheet, where the electrolyte includes a compound represented by formula (I): 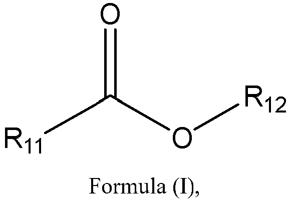 where R₁₁ and R₁₂ are each independently selected from a fluorine-substituted or unsubstituted C₁ to C₁₀ alkyl, and at least one of R₁₁ or R₁₂ is fluorine-substituted. In some embodiments of this application, R₁₁ and R₁₂ are each independently a fluorine-substituted or unsubstituted group selected from methyl, ethyl, or propyl; and at least one of R₁₁ or R₁₂ is fluorine-substituted. Based on a mass of the electrolyte, a mass percentage of the compound represented by formula (I) is A%, 30 ≤ A ≤ 80, preferably 40 ≤ A ≤ 75. The separator includes a porous substrate and a porous coating disposed on at least one side of the porous substrate. A porosity of the separator is 25% to 35%; and preferably, the porosity of the separator is 25% to 30%. For example, A may be 30, 40, 43, 50, 56, 60, 64, 70, 75, 80, or a range defined by any two of the above values. For example, the porosity of the separator may be 25%, 27%, 27.5%, 29%, 30%, 31%, 33%, 35%, or a range defined by any two of the above values.

In this application, the porous coating is disposed on at least one side of the porous substrate of the separator, and the porosity of the separator is adjusted within the above range, so that the separator has a relatively low porosity, ensuring that the separator of the electrochemical apparatus has relatively high mechanical strength, and helping to reduce the probability of internal short circuit of the electrochemical apparatus during actual operating conditions, thereby improving the safety performance of the electrochemical apparatus. However, the relatively low porosity of the separator can reduce a storage space for the electrolyte, reduce a retention amount of the electrolyte, and make the electrolyte prone to depletion, thereby causing a lithium ion transport channel between a positive electrode and a negative electrode to be blocked, affecting the transport of lithium ions, and further affecting the OCPD cycling performance of the electrochemical apparatus. In this application, the compound represented by formula (I) is introduced into the electrolyte, and the mass percentage A% thereof is adjusted within the above range. Since the compound represented by formula (I) has strong oxidation resistance, the oxidation reactions between a positive electrode active material and the electrolyte can be reduced, and an oxidation window of the electrolyte can be widened, allowing the electrochemical apparatus to have good positive electrode interface stability, reducing a consumption rate of the electrolyte and delay a depletion rate of the electrolyte, thereby improving the OCPD cycling performance of the electrochemical apparatus. Therefore, applying the above separator and the electrolyte including the compound represented by formula (I) to the electrochemical apparatus can improve the OCPD cycling performance of the electrochemical apparatus while ensuring the safety performance of the electrochemical apparatus. When the porosity of the separator is too small, for example less than 25%, lithium ion transport paths are insufficient, which is not conducive to improving the OCPD cycling performance of the electrochemical apparatus. When the porosity of the separator is too large, for example greater than 35%, the separator has an unstable structure and poor mechanical strength, which cannot resist the puncture of particles on a surface of an electrode sheet, easily causing local short circuits between the positive and negative electrodes and serious self-discharge problems, thus affecting the safety performance of the electrochemical apparatus. When A is too small, for example less than 30, the percentage of the compound represented by formula (I) is too low, the effect exerted is limited, the effect of enhancing the stability of the positive electrode interface is weak, and the effects of reducing the electrolyte consumption rate and delaying the electrolyte depletion rate are also weak, which is not conducive to improving the OCPD cycling performance of the electrochemical apparatus. When A is too large, for example greater than 80, the excessively high percentage of the compound represented by formula (I) increases the impedance of the electrochemical apparatus and increases polarization, which is not conducive to improving the OCPD cycling performance of the electrochemical apparatus. In this application, separators with different porosities can be obtained by adjusting a coating areal density, thickness, formulation composition, or the like of the porous coating.

In some embodiments of this application, the compound represented by formula (I) includes at least one of the following compounds:

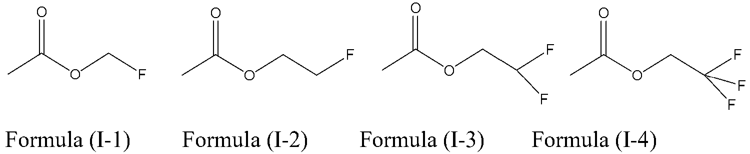

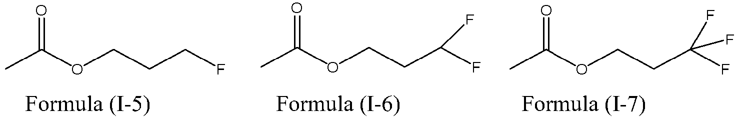

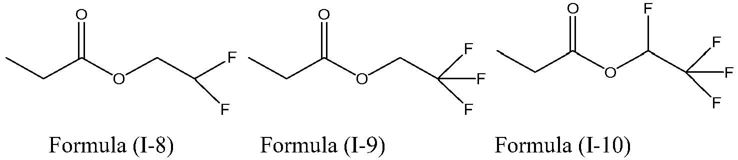

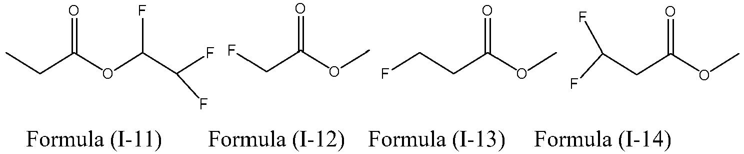

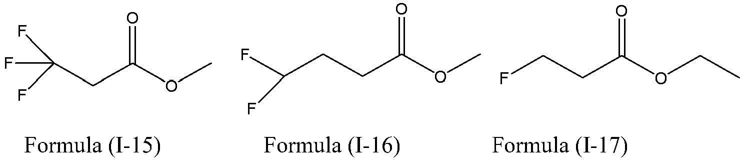

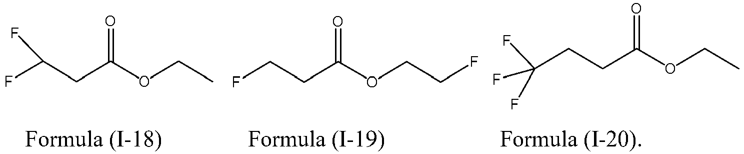

In the electrochemical apparatus of this application, the electrolyte includes the compound represented by formula (I) within the above range, which can better exert the effect of the compound represented by formula (I), allowing the electrochemical apparatus to have good positive electrode interface stability, and helping to reduce the consumption rate of the electrolyte and delay the depletion rate of the electrolyte, thereby helping to improve the OCPD cycling performance of the electrochemical apparatus while ensuring the safety performance of the electrochemical apparatus.

In some embodiments of this application, the electrolyte includes a non-fluorinated carboxylate ester, where the non-fluorinated carboxylate ester includes at least one of methyl formate, ethyl formate, methyl acetate, ethyl acetate, propyl acetate, methyl propionate, ethyl propionate, or propyl propionate; and based on the mass of the electrolyte, a mass percentage of the non-fluorinated carboxylate ester is B%, and 10 < B ≤ 60. For example, B may be 10, 20, 24, 30, 36, 40, 50, 58, 60, or a range defined by any two of the above values. The compound represented by formula (I) has a relatively high viscosity, resulting in poor wettability of the positive electrode interface and the negative electrode interface by the electrolyte. The non-fluorinated carboxylate ester has a structure similar to that of the compound represented by formula (I), good affinity, and relatively low viscosity. On the basis of the compound represented by formula (I), further introducing the above types of non-fluorinated carboxylate esters and adjusting the mass percentage B% thereof within the above range allow the electrolyte to have an appropriate viscosity, improve the wettability of the positive electrode interface and the negative electrode interface, and reduce polarization, thereby helping to improve the OCPD cycling performance of the electrochemical apparatus while ensuring the safety performance of the electrochemical apparatus.

In some embodiments of this application, the electrolyte includes a cyclic carbonate, where the cyclic carbonate includes at least one of ethylene carbonate, propylene carbonate, butylene carbonate, or vinylethylene carbonate; and based on the mass of the electrolyte, a mass percentage of the cyclic carbonate is C%, and 0 ≤ C ≤ 10. For example, C may be 0, 2, 3.5, 4, 6, 6.4, 8, 10, or a range defined by any two of the above values. The compound represented by formula (I) has poor dissociation of a lithium salt. On the basis of the compound represented by formula (I), further introducing the above types of cyclic carbonates and adjusting the mass percentage C% thereof within the above range are conducive to the dissociation of the lithium salt, improve the conductivity of the electrolyte, are also conducive to the film formation of anions of the lithium salt, adjust a solvation structure of the electrolyte, and enhance the stability of the positive electrode interface and the negative electrode interface, thereby helping to improve the OCPD cycling performance of the electrochemical apparatus while ensuring the safety performance of the electrochemical apparatus.

In some embodiments of this application, the electrolyte includes a trinitrile compound, where the trinitrile compound includes at least one of 1,3,5-pentanetricarbonitrile, 1,2,3-propanetricarbonitrile, 1,3,6-hexanetricarbonitrile, or 1,2,3-tris(2-cyanoethoxy)propane; and based on the mass of the electrolyte, a mass percentage of the trinitrile compound is D%, and 1 ≤ D ≤ 3. For example, D may be 1, 1.4, 1.8, 2, 2.4, 2.8, 3, or a range defined by any two of the above values. The trinitrile compound can complex with high-valence metal ions in the positive electrode active material to stabilize the positive electrode interface. On the basis of the compound represented by formula (I), further introducing the above types of trinitrile compounds and adjusting the mass percentage D% thereof within the above range can further enhance the stability of the positive electrode interface, thereby helping to improve the OCPD cycling performance of the electrochemical apparatus while ensuring the safety performance of the electrochemical apparatus.

In this application, the electrolyte further includes another organic solvent and another additive. This application has no particular limitation on the types of the another organic solvent and the another additive, provided that the objectives of this application can be achieved. For example, the another organic solvent may include but is not limited to at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, γ-butyrolactone, decanolactone, valerolactone, caprolactone, dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, tetrahydrofuran, dimethyl sulfoxide, 1,2-dioxolane, sulfolane, methyl sulfolane, 1,3-dimethyl-2-imidazolidinone, N-methyl-2-pyrrolidone, dimethylformamide, trimethyl phosphate, triethyl phosphate, or trioctyl phosphate. The another additive may include but is not limited to at least one of succinonitrile, adiponitrile, 1,3-propane sultone, vinyl sulfate, or vinylene carbonate.

In some embodiments of this application, based on the mass of the electrolyte, a sum of mass percentages of the another organic solvent and the another additive is E%, and 0 ≤ E ≤ 40. For example, E may be 0, 10, 15, 20, 23, 25, 30, 35, 37, 40, or a range defined by any two of the above values.

In this application, the electrolyte further includes a lithium salt. This application has no particular limitation on the type of the lithium salt, provided that the objectives of this application can be achieved. For example, the lithium salt may include but is not limited to at least one of lithium hexafluorophosphate, lithium bis(trifluoromethanesulfonyl)imide, lithium bis(fluorosulfonyl)imide, lithium tetrafluoroborate, lithium bis(oxalate)borate, lithium difluoro(oxalate)borate, or lithium difluorophosphate. Preferably, the lithium salt includes lithium hexafluorophosphate.

In some embodiments of this application, based on the mass of the electrolyte, a mass percentage of the lithium salt is F%, and 10 ≤ F ≤ 20. For example, F may be 10, 12, 12.5, 14, 15, 16, 18, 20, or a range defined by any two of the above values.

In some embodiments of this application, the electrolyte may include a lithium salt, a compound represented by formula (I), a cyclic carbonate, another organic solvent, and another additive. Mass percentages of the lithium salt, the compound represented by formula (I), the cyclic carbonate, the another organic solvent, and the another additive are as described above. The electrochemical apparatus including the above electrolyte has good OCPD cycling performance.

In some embodiments of this application, the electrolyte may include a lithium salt, a compound represented by formula (I), a cyclic carbonate, another organic solvent, and another additive as well as any one of a non-fluorinated carboxylate ester and a trinitrile compound. Mass percentages of the lithium salt, the compound represented by formula (I), the cyclic carbonate, the another organic solvent, the another additive, the non-fluorinated carboxylate ester, and the trinitrile compound are as described above. The electrochemical apparatus including the above electrolyte has good OCPD cycling performance.

In some embodiments of this application, the electrolyte may include a lithium salt, a compound represented by formula (I), a cyclic carbonate, a non-fluorinated carboxylate ester, a trinitrile compound, another organic solvent, and another additive. A mass percentage of the compound represented by formula (I) is 30% to 79%; a mass percentage of the non-fluorinated carboxylate ester is 10% to 59%; and mass percentages of the lithium salt, the cyclic carbonate, the trinitrile compound, the another organic solvent, and the another additive are as described above. The electrochemical apparatus including the above electrolyte has good OCPD cycling performance.

In some embodiments of this application, the coating areal density of the porous coating is 0.1 mg/1540.25 mm² to 10 mg/1540.25 mm²; and preferably, the coating areal density of the porous coating is 2.5 mg/1540.25 mm² to 5 mg/1540.25 mm². For example, the coating areal density of the porous coating may be 0.1 mg/1540.25 mm², 2 mg/1540.25 mm², 2.5 mg/1540.25 mm², 4 mg/1540.25 mm², 5 mg/1540.25 mm², 5.7 mg/1540.25 mm², 6 mg/1540.25 mm², 7.4 mg/1540.25 mm², 8 mg/1540.25 mm², 10 mg/1540.25 mm², or a range defined by any two of the above values. Adjusting the coating areal density of the porous coating within the above range allows the separator to have a relatively low porosity, ensuring that the separator of the electrochemical apparatus has relatively high mechanical strength, helping to reduce the probability of internal short circuit of the electrochemical apparatus during actual operating conditions, thereby improving the safety performance of the electrochemical apparatus. In addition, this also helps to allow the separator to have relatively high adhesion with the positive electrode sheet and the negative electrode sheet, helping to reduce the thickness of the electrochemical apparatus, thereby helping to allow the electrochemical apparatus to have good OCPD cycling performance and increase a volumetric energy density of the electrochemical apparatus while ensuring the safety performance of the electrochemical apparatus.

In some embodiments of this application, the porous coating includes inorganic particles and a fluorine-containing binder, where based on a mass of the porous coating, a mass ratio of the inorganic particles to the fluorine-containing binder is m, and 1 ≤ m ≤ 2. For example, m may be 1, 1.2, 1.4, 1.6, 1.8, 2, or a range defined by any two of the above values. The compound represented by formula (I) has a relatively high viscosity, resulting in poor wettability of the electrode sheet by the electrolyte. The fluorine-containing binder in the porous coating can improve the affinity of the electrode sheet for the electrolyte and improve the wettability of the electrode sheet by the electrolyte, thereby helping to improve the OCPD cycling performance of the electrochemical apparatus. The inorganic particles in the porous coating can improve the high temperature resistance and heat shrinkage resistance of the separator and enhance the mechanical strength of the separator, thereby helping to improve the safety performance of the electrochemical apparatus on the basis of the electrochemical apparatus having good OCPD cycling performance. Adjusting the mass ratio m of the inorganic particles to the fluorine-containing binder within the above range allows the separator to have relatively high adhesion with the positive electrode sheet and the negative electrode sheet while exerting the effects of the inorganic particles and the fluorine-containing binder, helping to reduce the thickness of the electrochemical apparatus and ensuring that the separator has an appropriate porosity, thereby helping to allow the electrochemical apparatus to have good OCPD cycling performance and increase the volumetric energy density of the electrochemical apparatus while ensuring the safety performance of the electrochemical apparatus.

In some embodiments of this application, the inorganic particles include at least one of magnesium hydroxide, boehmite, or aluminum oxide, preferably magnesium hydroxide. Selecting the above types of inorganic particles can improve the high temperature resistance and heat shrinkage resistance of the separator and enhance the mechanical strength of the separator, thereby helping to improve the safety performance of the electrochemical apparatus on the basis of the electrochemical apparatus having good OCPD cycling performance. When the inorganic particles are magnesium hydroxide, its excellent flame retardant performance can further improve the high temperature resistance and heat shrinkage resistance of the separator and enhance the mechanical strength of the separator, thereby further helping to further improve the safety performance of the electrochemical apparatus on the basis of the electrochemical apparatus having good OCPD cycling performance.

In some embodiments of this application, the fluorine-containing binder includes a polyvinylidene fluoride-based binder, where the polyvinylidene fluoride-based binder includes at least one of polyvinylidene fluoride or polyvinylidene fluoride-hexafluoropropylene copolymer. The compound represented by formula (I) has a relatively high viscosity, resulting in poor wettability of the electrode sheet by the electrolyte. Selecting the above types of fluorine-containing binders can improve the affinity of the electrode sheet for the electrolyte and improve the wettability of the electrode sheet by the electrolyte, thereby helping to improve the OCPD cycling performance of the electrochemical apparatus while ensuring the safety performance of the electrochemical apparatus.

The porous coating of this application may further include a wetting agent and an auxiliary binder. Based on the mass of the porous coating, a mass percentage of the inorganic particles may be 25% to 70%, a mass percentage of the fluorine-containing binder may be 20% to 60%, a mass percentage of the wetting agent may be 5% to 10%, and a mass percentage of the auxiliary binder may be 5% to 15%. For example, the mass percentage of the inorganic particles may be 25%, 30%, 35%, 40%, 45%, 50%, 55%, 60%, 65%, 70%, or a range defined by any two of the above values. The mass percentage of the fluorine-containing binder may be 20%, 25%, 30%, 35%, 40%, 45%, 50%, 55%, 60%, or a range defined by any two of the above values. The mass percentage of the wetting agent may be 5%, 6%, 7%, 8%, 9%, 10%, or a range defined by any two of the above values. The mass percentage of the auxiliary binder may be 5%, 7%, 9%, 10%, 12%, 15%, or a range defined by any two of the above values. This application has no particular limitation on the types of the wetting agent and the auxiliary binder, provided that the objectives of this application can be achieved. For example, the wetting agent may include but is not limited to at least one of dimethyl siloxane, polyethylene oxide, oxyethylene alkyl phenol ether, polyoxyethylene fatty alcohol ether, polyoxyethylene polyoxypropylene block copolymer, or sodium dioctyl sulfosuccinate. The auxiliary binder may include but is not limited to a homopolymer or copolymer obtained by polymerizing at least one of ethyl acrylate, butyl acrylate, ethyl methacrylate, styrene, chlorostyrene, fluorostyrene, methylstyrene, acrylic acid, methacrylic acid, maleic acid, acrylonitrile, or butadiene.

This application has no particular limitation on the porous substrate of the separator, provided that the objectives of this application can be achieved. For example, the material of the porous substrate may include but is not limited to at least one of a polyolefin-based film mainly including polyethylene, polypropylene, or polytetrafluoroethylene, a polyester film (for example, a polyethylene terephthalate (PET) film), a cellulose film, a polyimide film, a polyamide film, spandex, or an aramid film. The type of the porous substrate may include but is not limited to at least one of a woven film, a non-woven film (non-woven fabric), a microporous film, a composite film, a calendered film, or a spunbond film. In this application, the thickness of the porous substrate is not particularly limited, provided that the objectives of this application can be achieved. For example, the thickness of the porous substrate may be 3 µm to 30 µm. In this application, the size of a pore diameter of the porous substrate is not particularly limited, provided that the objectives of this application can be achieved. For example, the size of the pore diameter may be 0.01 µm to 1 µm.

This application has no particular limitation on the positive electrode sheet, provided that the objectives of this application can be achieved. For example, the positive electrode sheet includes a positive electrode current collector and a positive electrode active material layer disposed on at least one surface of the positive electrode current collector. In this application, the positive electrode active material layer may be disposed on one surface of the positive electrode current collector in a thickness direction thereof or on both surfaces of the positive electrode current collector in the thickness direction thereof. It should be noted that the "surface" here may be an entire region of the positive electrode current collector or a partial region of the positive electrode current collector, which is not particularly limited in this application, provided that the objectives of this application can be achieved.

This application has no particular limitation on the positive electrode current collector, provided that the objectives of this application can be achieved. For example, the positive electrode current collector may include but is not limited to aluminum foil, aluminum alloy foil, or a composite current collector (for example, an aluminum-carbon composite current collector). This application has no particular limitation on the thickness of the positive electrode current collector and the positive electrode active material layer, provided that the objectives of this application can be achieved. For example, the thickness of the positive electrode current collector is 6 µm to 12 µm, and the thickness of the positive electrode active material layer is 30 µm to 120 µm. This application has no particular limitation on the thickness of the positive electrode sheet, provided that the objectives of this application can be achieved. For example, the thickness of the positive electrode sheet is 50 µm to 250 µm.

The positive electrode active material layer of this application includes a positive electrode active material, where the positive electrode active material includes a substance capable of reversibly intercalating and deintercalating active ions such as lithium ions. There may be one or more positive electrode active material layers. Layers in multiple positive electrode active material layers may contain the same or different positive electrode active materials. This application has no particular limitation on the positive electrode active material, provided that the objectives of this application can be achieved. For example, the positive electrode active material may include but is not limited to at least one of lithium nickel cobalt manganese oxide (for example, NCM811, NCM622, NCM523, or NCM111), lithium nickel cobalt aluminate, lithium iron phosphate, lithium-rich manganese-based material, lithium cobalt oxide (LiCoO₂), lithium manganate, lithium iron manganese phosphate, or lithium titanate. The chemical formula of the above lithium-rich manganese-based material is LiMnO·LiMO, and M may include Ni, Co, or Mn. In this application, the surface of the positive electrode active material may be attached with a substance having a different composition from the positive electrode active material. Exemplarily, the substance attached to the surface may include but is not limited to at least one of aluminum oxide, silicon dioxide, titanium dioxide, zirconium oxide, magnesium oxide, calcium oxide, boron oxide, antimony oxide, bismuth oxide, lithium sulfate, sodium sulfate, potassium sulfate, magnesium sulfate, calcium sulfate, aluminum sulfate, lithium carbonate, calcium carbonate, magnesium carbonate, or carbon. The above substances are attached to the surface of the positive electrode active material, so that the oxidation reactions of the electrolyte on the surface of the positive electrode active material can be suppressed, thereby extending the service life of the electrochemical apparatus.

The positive electrode active material layer may further include a positive electrode conductive agent and a positive electrode binder. This application has no particular limitation on the types of the positive electrode conductive agent and the positive electrode binder, provided that the objectives of this application can be achieved. For example, the positive electrode binder may include but is not limited to at least one of polyvinyl alcohol, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon. The positive electrode conductive agent may include but is not limited to at least one of a carbon-based material, a metal-based material, or a conductive polymer. Exemplarily, the carbon-based material may include at least one of natural graphite, artificial graphite, conductive carbon black (Super P), or carbon fiber. The metal-based material may include but is not limited to at least one of metal powder, metal fiber, copper, nickel, aluminum, or silver. The conductive polymer may include polyphenylene derivatives. This application has no particular limitation on a mass ratio of the positive electrode active material, the positive electrode conductive agent, and the positive electrode binder in the positive electrode active material layer, which may be selected according to actual needs, provided that the objectives of this application can be achieved.

This application has no particular limitation on the negative electrode sheet, provided that the objectives of this application can be achieved. For example, the negative electrode sheet includes a negative electrode current collector and a negative electrode active material layer disposed on at least one surface of the negative electrode current collector. In this application, the negative electrode active material layer may be disposed on one surface of the negative electrode current collector in a thickness direction thereof or on both surfaces of the negative electrode current collector in the thickness direction thereof. It should be noted that the "surface" here may be an entire region of the negative electrode current collector or a partial region of the negative electrode current collector, which is not particularly limited in this application, provided that the objectives of this application can be achieved.

This application has no particular limitation on the negative electrode current collector, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector (for example, a carbon-copper composite current collector, a nickel-copper composite current collector, or a titanium-copper composite current collector). In this application, there is no particular limitation on the thicknesses of the negative electrode current collector and the negative electrode active material layer, provided that the objectives of this application can be achieved. For example, the thickness of the negative electrode current collector is 6 µm to 12 µm, and the thickness of the negative electrode active material layer is 30 µm to 150 µm. In this application, there is no particular limitation on the thickness of the negative electrode sheet, provided that the objectives of this application can be achieved. For example, the thickness of the negative electrode sheet is 50 µm to 350 µm.

The negative electrode active material layer of this application includes a negative electrode active material. There may be one or more negative electrode active material layers. Layers in the multiple negative electrode active material layers may contain the same or different negative electrode active materials. The negative electrode active material is any substance capable of reversibly intercalating and deintercalating active ions such as lithium ions. The negative electrode active material may include but is not limited to at least one of graphite, mesocarbon microbeads (MCMB), hard carbon, soft carbon, silicon, silicon-carbon composite, SiOₓ (0.5 < x < 1.6), Li-Sn alloy, Li-Sn-O alloy, Sn, SnO, SnO₂, spinel-structured lithium titanate-lithiated TiO₂-Li₄Ti₅O₁₂, Li-Al alloy, or metallic lithium.

The negative electrode active material layer in this application may further include a negative electrode binder and a negative electrode conductive agent; or the negative electrode active material layer may further include a negative electrode binder, a negative electrode conductive agent, or a thickener. This application has no particular limitation on the types of the negative electrode binder and the negative electrode conductive agent, provided that the objectives of this application can be achieved. For example, the negative electrode binder may include but is not limited to at least one of the above positive electrode binders. The negative electrode conductive agent may include but is not limited to at least one of the above positive electrode conductive agents. This application has no particular limitation on the type of the thickener, provided that the objectives of this application can be achieved. For example, the thickener may include but is not limited to at least one of sodium carboxymethyl cellulose or carboxymethyl cellulose.

The electrochemical apparatus of this application further includes a packaging bag for accommodating the positive electrode sheet, the separator, the negative electrode sheet, and the electrolyte, as well as other components known in the art in the electrochemical apparatus. This application has no particular limitation on the above other components. This application has no particular limitation on the packaging bag. The packaging bag may be a packaging bag well known in the art, provided that the objectives of this application can be achieved. For example, an aluminum-plastic film packaging bag may be used.

The electrochemical apparatus of this application is not particularly limited and may include any apparatus in which an electrochemical reaction occurs. In some embodiments of this application, the electrochemical apparatus may include but is not limited to a lithium-ion battery, a sodium-ion battery, a lithium polymer electrochemical apparatus, a lithium-ion polymer electrochemical apparatus, or the like.

The preparation process of the electrochemical apparatus is well known to those skilled in the art, which is not particularly limited in this application. For example, the preparation process of the electrochemical apparatus may include but is not limited to the following steps: stacking the positive electrode sheet, the separator, and the negative electrode sheet in sequence, and performing an operation of winding or folding the resulting stack as needed to obtain an electrode assembly with a wound structure, placing the electrode assembly in a packaging bag, injecting the electrolyte into the packaging bag, and sealing to obtain the electrochemical apparatus; or stacking the positive electrode sheet, the separator, and the negative electrode sheet in sequence, then fixing four corners of an entire laminated structure with an adhesive tape to obtain an electrode assembly with a laminated structure, placing the electrode assembly in a packaging bag, injecting the electrolyte into the packaging bag, and sealing to obtain the electrochemical apparatus. In addition, an overcurrent prevention element, a guide plate, and the like may be placed in the packaging bag as needed to prevent the pressure rise, overcharge, and overdischarge inside the electrochemical apparatus.

A second aspect of this application provides an electronic apparatus including the electrochemical apparatus according to any one of the foregoing embodiments of this application. The electrochemical apparatus provided in this application has good OCPD cycling performance, so that the electronic apparatus provided in this application has a long service life and good performance.

The electronic apparatus of this application is not particularly limited, which may be any electronic apparatus known in the prior art. For example, the electronic apparatus may include but is not limited to a notebook computer, a pen input computer, a mobile computer, an e-book player, a portable telephone, a portable fax machine, a portable copier, a portable printer, a stereo headset, a video recorder, a liquid crystal television, a portable cleaner, a portable CD player, a mini disc, a transceiver, an electronic notebook, a calculator, a memory card, a portable recorder, a radio, a backup power supply, a motor, an automobiles, a motorcycle, a power-assisted bicycle, a bicycle, a lighting fixture, a toy, a game console, a clock, a power tool, a flash lamp, a camera, a large household battery, and a lithium-ion capacitor.

### Examples

The following more specifically illustrate some embodiments of this application by using examples and comparative examples. Various tests and evaluations were carried out according to the following methods. In addition, unless otherwise specified, "parts" and "%" are based on mass.

### Test methods and devices

### Test for porosity of separator

The porosity of the separator was tested according to the national standard GB/T 21650.1-2008 Determination of Pore Size Distribution and Porosity of Solid Materials by Mercury Porosimetry and Gas Adsorption Method-Part 1: Mercury Porosimetry.

### Test for coating areal density of porous coating

Lithium-ion batteries of respective examples and comparative examples were discharged at 0.5C to 3.0 V and then disassembled to obtain the separator. The separator surface was cleaned with dimethyl carbonate (DMC) to remove impurities and then dried at 60°C to obtain test samples of the separator. A small disc with an area of S mm² was punched from each test sample of the separator, and a mass of the small disc was weighed and recorded as m₁. Then, a porous coating on one side of the small disc was peeled off, and the mass of the small disc after peeling off the porous coating was measured and recorded as m₂. The coating areal density of the porous coating was calculated as (m₁ - m₂)/S.

### Test for OCPD cycling performance

The test temperature was adjusted to a constant temperature of 25°C. The lithium-ion battery was charged at a constant current of 0.5C to 4.48 V, then charged at a constant voltage of 4.48 V to 0.05C, left standing for 12 h, then discharged at a constant current of 0.2C to 3.0 V, and left standing for 5 h. This was one charge-discharge cycle with a total time of 24 h. This was the first cycle, and a discharge capacity of the first cycle was recorded. The lithium-ion battery was charged and discharged according to the above method, and a discharge capacity of each cycle was recorded until the discharge capacity of the lithium-ion battery decayed to 80% of the discharge capacity of the first cycle. The number of charge-discharge cycles was recorded as the number of OCPD cycles at 25°C.

### Test for hot box pass rate at 135°C for 1 h

At 25°C, the lithium-ion battery was charged at a constant current of 0.7C to 4.48 V, and then charged at a constant voltage of 4.48 V until the current was 0.05C. The lithium-ion battery was placed in a high-temperature box, heated to 135°C at a temperature rise rate of 5±2°C/min, and then held for 1 h, and the changes in the voltage, temperature, and hot box temperature of the lithium-ion battery were recorded. The lithium-ion battery passed the test if it exhibits no fire, explosion, or smoke. 10 lithium-ion batteries were prepared according to the preparation methods of the examples and comparative examples and tested according to the above method. The number of lithium-ion batteries passing the test was recorded. The safety performance was characterized by a hot box pass rate at 135°C for 1 h. A larger number of lithium-ion batteries passing the test indicated better safety performance.

### Example 1-1

### <Preparation of separator>

A porous polyethylene film with a thickness of 5 µm (provided by Celgard) was used as the porous substrate.

Inorganic particles magnesium hydroxide, polyvinylidene fluoride (with a weight average molecular weight Mw = 1.3 × 10⁶) as a fluorine-containing binder, dimethyl siloxane (CH₃)₂SiO as a wetting agent, and acrylonitrile as an auxiliary binder were mixed at a mass ratio of 51:34:10:5, and deionized water was added as a solvent. The resulting mixture was well stirred to form a porous coating slurry with a solid content of 12wt%. The porous coating slurry was applied on one surface of a porous substrate with a coating areal density of 3.3 mg/1540.25 mm², and after drying, a porous coating was formed on one surface of the porous substrate. The porous coating slurry was applied on another surface of the porous substrate with a same coating areal density, and after drying, a separator with porous coatings on both surfaces was obtained. The porosity of the separator was 30%. The mass ratio m of the inorganic particles to the fluorine-containing binder was calculated as 1.5.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed at a mass ratio of 10:10:80 to obtain a base solvent, then lithium hexafluorophosphate (LiPF₆) as a lithium salt and a compound represented by formula (I-3) of formula (I) were added to the base solvent and well mixed to obtain an electrolyte. Based on the mass of the electrolyte, a mass percentage of the lithium salt LiPF₆ was 12.5%, a mass percentage A% of the compound represented by formula (I-3) was 30%, and the rest was the base solvent.

### <Preparation of positive electrode sheet>

LiCoO₂ as a positive electrode active material, conductive carbon black (Super P) as a positive electrode conductive agent, and polyvinylidene fluoride (PVDF, Mw = 7 × 10⁶) as a positive electrode binder were mixed at a mass ratio of 97.5:1:1.5, and N-methylpyrrolidone (NMP) was added as a solvent. The resulting mixture was well stirred under the action of a vacuum mixer to obtain a positive electrode slurry with a solid content of 75wt%. The positive electrode slurry was uniformly applied on one surface of an aluminum foil as a positive electrode current collector with a thickness of 10 µm, followed by drying at 85°C and cold pressing, to obtain a positive electrode sheet having one surface coated with a positive electrode active material layer with a thickness of 50 µm. Then, the above steps were repeated on another surface of the aluminum foil to obtain a positive electrode sheet having double surfaces coated with positive electrode active material layers. After cutting and welding an aluminum tab as a positive electrode tab, a positive electrode sheet with a specification of 74 mm × 851 mm was obtained for use.

### <Preparation of negative electrode sheet>

Artificial graphite as a negative electrode active material, Super P as a negative electrode conductive agent, carboxymethyl cellulose (CMC-Na, Mw = 7 × 10⁵) as a thickener, and styrene-butadiene rubber (SBR, Mw = 5 × 10⁶) as a negative electrode binder were mixed at a mass ratio of 97.5:1:0.5:1, and then deionized water was added as a solvent. The resulting mixture was well stirred under the action of a vacuum mixer to obtain a negative electrode slurry with a solid content of 50wt%. The negative electrode slurry was uniformly applied on one surface of a copper foil as a negative electrode current collector with a thickness of 8 µm, followed by drying at 85°C and cold pressing, to obtain a negative electrode sheet having one surface coated with a negative electrode active material layer with a thickness of 60 µm. Then, the above steps were repeated on another surface of the copper foil to obtain a negative electrode sheet having double surfaces coated with negative electrode active material layers. After cutting and welding a nickel tab as a negative electrode tab, a negative electrode sheet with a specification of 76 mm × 867 mm was obtained for use.

### <Preparation of lithium-ion battery>

The negative electrode sheet, the separator, and the positive electrode sheet prepared above were stacked in sequence and then wound to obtain an electrode assembly with a wound structure. The electrode assembly was placed in an aluminum-plastic film packaging bag, dried, and injected with the electrolyte. Processes such as vacuum sealing, standing, formation (charging at a constant current of 0.3C to 3.5 V and then charging at a constant current of 1C to 3.9 V), capacity, degassing, and edge cutting were performed to obtain a lithium-ion battery.

### Examples 1-2 to 1-5

These examples were the same as Example 1-1 except that in the <preparation of electrolyte>, the mass percentage A% of the compound represented by formula (I-3) was adjusted according to Table 1. When the mass percentage A% of the compound represented by formula (I-3) changed, the mass percentage of the base solvent changed accordingly, while the mass ratio of EC, PC, and DEC and the mass percentage of the lithium salt remained unchanged.

### Examples 1-6 to 1-9

These examples were the same as Example 1-3 except that in the <preparation of separator>, the coating areal density of the porous coating and the porosity of the separator were adjusted according to Table 1.

### Examples 1-10 to 1-12

These examples were the same as Example 1-3 except that in the <preparation of electrolyte>, the type of the compound represented by formula (I) was adjusted according to Table 1.

### Example 2-1

This example was the same as Example 1-3 except for the <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed at a mass ratio of 10:10:80 to obtain a base solvent, then lithium hexafluorophosphate (LiPF₆) as a lithium salt, the compound represented by formula (I-3) of formula (I), and propyl propionate as a non-fluorinated carboxylate ester were added to the base solvent and well mixed to obtain an electrolyte. Based on a mass of the electrolyte, a mass percentage of the lithium salt LiPF₆ was 12.5%, a mass percentage A% of the compound represented by formula (I-3) was 65%, a mass percentage B% of propyl propionate was 10%, and the rest was the base solvent.

### Example 2-2

This example was the same as Example 2-1 except that in the <preparation of electrolyte>, the mass percentage A% of the compound represented by formula (I-3) and the mass percentage B% of propyl propionate were adjusted according to Table 2. When the mass percentage A% of the compound represented by formula (I-3) and the mass percentage B% of propyl propionate changed, the mass ratio of EC, PC, and DEC, the mass percentage of the base solvent, and the mass percentage of the lithium salt remained unchanged.

### Example 2-3

This example was the same as Example 1-3 except for the <preparation of electrolyte>.

### <Preparation of electrolyte>

In an argon atmosphere glove box with a water content of less than 10 ppm, the compound represented by formula (I-3) of formula (I) and propyl propionate as a non-fluorinated carboxylate ester were well mixed at a mass ratio of 30:57.5, then lithium hexafluorophosphate (LiPF₆) as a lithium salt was added and well mixed to obtain an electrolyte. Based on a mass of the electrolyte, a mass percentage of the lithium salt LiPF₆ was 12.5%, and the rest was the compound represented by formula (I-3) and propyl propionate.

### Examples 2-4 and 2-5

These examples were the same as Example 2-2 except that in the <preparation of electrolyte>, the type of the non-fluorinated carboxylate ester was adjusted according to Table 2.

### Example 2-6

This example was the same as Example 1-3 except for the <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed at a mass ratio of 10:10:80 to obtain a base solvent, then lithium hexafluorophosphate (LiPF₆) as a lithium salt, the compound represented by formula (I-3) of formula (I), and 1,3,6-hexanetricarbonitrile as a trinitrile compound were added to the base solvent and well mixed to obtain an electrolyte. Based on a mass of the electrolyte, a mass percentage of the lithium salt LiPF₆ was 12.5%, a mass percentage A% of the compound represented by formula (I-3) was 50%, a mass percentage D% of 1,3,6-hexanetricarbonitrile was 1%, and the rest was the base solvent.

### Examples 2-7 and 2-8

These examples were the same as Example 2-6 except that the mass percentage D% of 1,3,6-hexanetricarbonitrile was adjusted according to Table 2. When the mass percentage D% of 1,3,6-hexanetricarbonitrile changed, the mass percentage of the base solvent changed accordingly, while the mass ratio of EC, PC, and DEC, the mass percentage of the lithium salt, and the mass percentage A% of the compound represented by formula (I-3) remained unchanged.

### Example 2-9

This example was the same as Example 1-3 except for the <preparation of electrolyte>.

### <Preparation of electrolyte>

In an argon atmosphere glove box with a water content of less than 10 ppm, ethylene carbonate (EC) as a cyclic carbonate, propylene carbonate (PC) as cyclic carbonate, and diethyl carbonate (DEC) as another organic solvent were well mixed at a mass ratio of 10:10:80 to obtain a base solvent, then lithium hexafluorophosphate (LiPF₆) as a lithium salt, the compound represented by formula (I-3) of formula (I), propyl propionate as a non-fluorinated carboxylate ester, and 1,3,6-hexanetricarbonitrile as a trinitrile compound were added to the base solvent and well mixed to obtain an electrolyte. Based on a mass of the electrolyte, a mass percentage of the lithium salt LiPF₆ was 12.5%, a mass percentage A% of the compound represented by formula (I-3) was 49%, a mass percentage C% of propyl propionate was 25%, a mass percentage D% of 1,3,6-hexanetricarbonitrile was 1%, and the rest was the base solvent.

### Examples 2-10 and 2-11

These examples were the same as Example 2-9 except that in the <preparation of electrolyte>, the mass percentage A% of the compound represented by formula (I-3) and the mass percentage D% of 1,3,6-hexanetricarbonitrile were adjusted according to Table 2. When the mass percentage A% of the compound represented by formula (I-3) and the mass percentage D% of 1,3,6-hexanetricarbonitrile changed, the mass ratio of EC, PC, and DEC, the mass percentage of the base solvent, the mass percentage of the lithium salt, and the mass percentage B% of propyl propionate remained unchanged.

### Example 2-12

This example was the same as Example 2-10 except that in the <preparation of electrolyte>, the type of the trinitrile compound was adjusted according to Table 2.

### Example 2-13

This example was the same as Example 1-3 except for the <preparation of electrolyte>.

### <Preparation of electrolyte>

In an argon atmosphere glove box with a water content of less than 10 ppm, the compound represented by formula (I-3) of formula (I) and propyl propionate as a non-fluorinated carboxylate ester were well mixed at a mass ratio of 50:37.5, then lithium hexafluorophosphate (LiPF₆) as a lithium salt was added and well mixed to obtain an electrolyte. Based on a mass of the electrolyte, a mass percentage of the lithium salt LiPF₆ was 12.5%, and the rest was the compound represented by formula (I-3) and propyl propionate.

### Example 3-1

This example was the same as Example 1-3 except that in the <preparation of separator>, inorganic particles magnesium hydroxide, polyvinylidene fluoride (with a weight average molecular weight Mw = 1.3 × 10⁶) as a fluorine-containing binder, dimethyl siloxane (CH₃)₂SiO as a wetting agent, and acrylonitrile as an auxiliary binder were mixed at a mass ratio of 42.5:42.5:10:5, so that a mass ratio m of the inorganic particles to the fluorine-containing binder was 1.

### Example 3-2

This example was the same as Example 1-3 except that in the <preparation of separator>, inorganic particles magnesium hydroxide, polyvinylidene fluoride (with a weight average molecular weight Mw = 1.3 × 10⁶) as a fluorine-containing binder, dimethyl siloxane (CH₃)₂SiO as a wetting agent, and acrylonitrile as an auxiliary binder were mixed at a mass ratio of 56.6:28.4:10:5, so that a mass ratio m of the inorganic particles to the fluorine-containing binder was 2.

### Examples 3-3 and 3-4

This example was the same as Example 1-3 except that in the <preparation of separator>, the parameters were adjusted according to Table 3.

### Comparative Examples 1 and 2

These comparative examples were the same as Example 1-3 except that in the <preparation of separator>, the coating areal density of the porous coating and the porosity of the separator were adjusted.

### Comparative Example 3

This comparative example was the same as Example 1-1 except for the <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed at a mass ratio of 10:10:80 to obtain a base solvent, then lithium hexafluorophosphate (LiPF₆) as a lithium salt was added to the base solvent and well mixed to obtain an electrolyte. Based on a mass of the electrolyte, a mass percentage of the lithium salt LiPF₆ was 12.5%, and the rest was the base solvent.

### Comparative Examples 4 and 5

These comparative examples were the same as Example 1-1 except that in the <preparation of electrolyte>, the mass percentage A% of the compound represented by formula (I-3) was adjusted according to Table 1. When the mass percentage A% of the compound represented by formula (I-3) changed, the mass percentage of the base solvent changed accordingly, while the mass ratio of EC, PC, and DEC and the mass percentage of the lithium salt remained unchanged.

The preparation parameters and performance parameters of the examples and comparative examples are shown in Tables 1 to 3.

**Table 1**

| | Porosity of separator (%) | Coating areal density of porous coating (mg/1540.25 mm²) | Compound represented by formula (I) | A (%) | Cyclic carbonate | C (%) | OCPD cycles at 25°C (cycle) | Hot box pass rate at 135°C for 1 h |
|---|---|---|---|---|---|---|---|---|
| Example1-1 | 30 | 3.3 | Formula (I-3) | 30 | EC+PC | 11.5 | 750 | 8/10 |
| Example 1-2 | 30 | 3.3 | Formula (I-3) | 40 | EC+PC | 9.5 | 770 | 8/10 |
| Example1-3 | 30 | 3.3 | Formula (I-3) | 50 | EC+PC | 7.5 | 800 | 8/10 |
| Example 1-4 | 30 | 3.3 | Formula (I-3) | 75 | EC+PC | 2.5 | 790 | 8/10 |
| Example1-5 | 30 | 3.3 | Formula (I-3) | 80 | EC+PC | 1.5 | 770 | 8/10 |
| Example1-6 | 25 | 4.0 | Formula (I-3) | 50 | EC+PC | 7.5 | 760 | 10/10 |
| Example1-7 | 28 | 3.7 | Formula (I-3) | 50 | EC+PC | 7.5 | 780 | 9/10 |
| Example1-8 | 32 | 3.0 | Formula (I-3) | 50 | EC+PC | 7.5 | 750 | 7/10 |
| Example1-9 | 35 | 2.7 | Formula (I-3) | 50 | EC+PC | 7.5 | 750 | 6/10 |
| Example1-10 | 30 | 3.3 | Formula (I-2) | 50 | EC+PC | 7.5 | 810 | 8/10 |
| Example1-11 | 30 | 3.3 | Formula (I-4) | 50 | EC+PC | 7.5 | 805 | 8/10 |
| Example1-12 | 30 | 3.3 | Formula (I-18) | 50 | EC+PC | 7.5 | 800 | 8/10 |
| Comparative Example 1 | 20 | 4.6 | Formula (I-3) | 50 | EC+PC | 7.5 | 470 | 10/10 |
| Comparative Example 2 | 40 | 2.2 | Formula (I-3) | *50* | EC+PC | 7.5 | 650 | 4/10 |
| Comparative Example 3 | 30 | 3.3 | \ | \ | EC+PC | 17.5 | 650 | 8/10 |
| Comparative Example 4 | 30 | 3.3 | Formula (I-3) | 20 | EC+PC | 13.5 | 660 | 8/10 |
| Comparative Example 5 | 30 | 3.3 | Formula (I-3) | 82.5 | EC+PC | 1 | 630 | 8/10 |

| | | | | | | | | |
|---|---|---|---|---|---|---|---|---|
| Note: "\" in Table 1 indicates no corresponding parameter. Taking the data of the hot box pass rate at 135°C for 1 h of Example 1-3 in Table 1 as an example, 8/10 means that 8 lithium-ion batteries of 10 lithium-ion batteries passed the hot box test, and the other examples can be understood similarly. | | | | | | | | |

From Examples 1-1 to 1-12 and Comparative Examples 1 to 5, it can be seen that in the lithium-ion battery of each of the examples of this application, the compound represented by formula (I) is added to the electrolyte, the mass percentage A% of the compound represented by formula (I) is within the range of this application, the porous coating is disposed on at least one side of the porous substrate in the separator, and the porosity of the separator is within the range of this application, the lithium-ion battery has a larger number of OCPD cycles at 25°C and a higher hot box pass rate at 135°C for 1 h, indicating that the lithium-ion battery has good OCPD cycling performance and safety performance. In contrast, in the lithium-ion battery of each of Comparative Examples 1 and 2, the porosity of the separator is not within the range of this application; in the lithium-ion battery of Comparative Example 3, the electrolyte does not include the compound represented by formula (I); and in the lithium-ion battery of each of Comparative Examples 4 and 5, the mass percentage A% of the compound represented by formula (I) in the electrolyte is not within the range of this application, so that the lithium-ion battery of each of Comparative Examples 1 to 5 has a smaller number of OCPD cycles at 25°C and a lower hot box pass rate at 135°C for 1 h, indicating that the lithium-ion battery has poorer OCPD cycling performance and safety performance.

The mass percentage A% of the compound represented by formula (I) typically affects the OCPD cycling performance and safety performance of the lithium-ion battery. From Examples 1-1 to 1-5 and Comparative Examples 3 to 5, it can be seen that when A is too small, for example, in Comparative Examples 3 and 4, the compound represented by formula (I) exerts a limited effect, and the lithium-ion battery has a smaller number of OCPD cycles at 25°C. When A is too large, for example, in Comparative Example 5, excessive compound represented by formula (I) increases the impedance and polarization of the lithium-ion battery, resulting in a smaller number of OCPD cycles at 25°C. This indicates that the lithium-ion battery has poorer OCPD cycling performance. A being within the range of this application helps to exert the effect of the compound represented by formula (I), allowing the lithium-ion battery to have a larger number of OCPD cycles at 25°C. This indicates that the lithium-ion battery has good OCPD cycling performance. In addition, the lithium-ion battery also has a high hot box pass rate at 135°C for 1 h, indicating that the lithium-ion battery has good safety performance.

The porosity of the separator typically affects the OCPD cycling performance and safety performance of the lithium-ion battery. From Example 1-3, Examples 1-6 to 1-9, and Comparative Examples 1 to 2, it can be seen that when the porosity of the separator is too small, for example, in Comparative Example 1, the lithium ion transport paths in the lithium-ion battery are insufficient, resulting in a smaller number of OCPD cycles at 25°C of the lithium-ion battery. When the porosity of the separator is too large, for example, in Comparative Example 2, the separator has an unstable structure and poor mechanical strength, leading to serious self-discharge problems and a smaller number of OCPD cycles at 25°C as well as a lower hot box pass rate at 135°C for 1 h of the lithium-ion battery. This indicates that the lithium-ion battery has poorer OCPD cycling performance and safety performance. When the porosity of the separator is within the range of this application, the lithium-ion battery has a larger number of OCPD cycles at 25°C, indicating that the lithium-ion battery has good OCPD cycling performance. In addition, the lithium-ion battery also has a high hot box pass rate at 135°C for 1 h, indicating that the lithium-ion battery has good safety performance.

The type of the compound represented by formula (I) typically affects the OCPD cycling performance and safety performance of the lithium-ion battery. From Example 1-3 and Examples 1-10 to 1-12, it can be seen that the electrolyte of the lithium-ion battery including the compound represented by formula (I) within the range of this application helps to exert the effect of the compound represented by formula (I), allowing the lithium-ion battery to have a large number of OCPD cycles at 25°C. This indicates that the lithium-ion battery has good OCPD cycling performance. In addition, the lithium-ion battery also has a high hot box pass rate at 135°C for 1 h, indicating that the lithium-ion battery has good safety performance.

**Table 2**

| | Compound represented by formula (I) | A (%) | Non-fluorinated carboxylate ester | B (%) | Cyclic carbonate | C (%) | Trinitrile compound | D (%) | OCPD cycles at 25°C (cycle) | Hot box pass rate at 135°C for 1 h |
|---|---|---|---|---|---|---|---|---|---|---|
| Example 1-3 | Formula (I-3) | 50 | \ | \ | EC+PC | 7.5 | \ | \ | 800 | 8/10 |
| Example 2-1 | Formula (I-3) | 65 | Propyl propionate | 10 | EC+PC | 2.5 | \ | \ | 820 | 8/10 |
| Example 2-2 | Formula (I-3) | 50 | Propyl propionate | 25 | EC+PC | 2.5 | \ | \ | 810 | 8/10 |
| Example 2-3 | Formula (I-3) | 30 | Propyl propionate | 57.5 | \ | \ | \ | \ | 802 | 8/10 |
| Example 2-4 | Formula (I-3) | 50 | Ethyl acetate | 25 | EC+PC | 2.5 | \ | \ | 805 | 7/10 |
| Example 2-5 | Formula (I-3) | 50 | Ethyl formate | 25 | EC+PC | 2.5 | \ | \ | 803 | 6/10 |
| Example 2-6 | Formula (I-3) | 50 | \ | \ | EC+PC | 7.3 | 1,3,6-hexanetricarbonitrile | 1 | 820 | 9/10 |
| Example 2-7 | Formula (I-3) | 50 | \ | \ | EC+PC | 7.1 | 1,3,6-hexanetricarbonitrile | 2 | 830 | 10/10 |
| Example 2-8 | Formula (I-3) | 50 | \ | \ | EC+PC | 6.9 | 1,3,6-hexanetricarbonitrile | 3 | 830 | 10/10 |
| Example 2-9 | Formula (I-3) | 49 | Propyl propionate | 25 | EC+PC | 2.5 | 1,3,6-hexanetricarbonitrile | 1 | 830 | 9/10 |
| Example 2-10 | Formula (I-3) | 48 | Propyl propionate | 25 | EC+PC | 2.5 | 1,3,6-hexanetricarbonitrile | 2 | 840 | 10/10 |
| Example 2-11 | Formula (I-3) | 47 | Propyl propionate | 25 | EC+PC | 2.5 | 1,3,6-hexanetricarbonitrile | 3 | 840 | 10/10 |
| Example 2-12 | Formula (I-3) | 48 | Propyl propionate | 25 | EC+PC | 2.5 | 1,2,3-tris(2-cyanoethoxy)propane | 2 | 840 | 10/10 |
| Example 2-13 | Formula (I-3) | 50 | Propyl propionate | 37.5 | \ | \ | \ | \ | 810 | 8/10 |

| | | | | | | | | | | |
|---|---|---|---|---|---|---|---|---|---|---|
| Note: "\" in Table 2 indicates no corresponding parameter. Taking the data of the hot box pass rate at 135°C for 1 h of Example 1-3 in Table 2 as an example, 8/10 means that 8 lithium-ion batteries of 10 lithium-ion batteries passed the hot box test, and the other examples can be understood similarly. | | | | | | | | | | |

The mass percentage B% of the non-fluorinated carboxylate ester typically affects the OCPD cycling performance and safety performance of the lithium-ion battery. From Example 1-3 and Examples 2-1 and 2-2, it can be seen that when the electrolyte of the lithium-ion battery includes the compound represented by formula (I) and the cyclic carbonate, the non-fluorinated carboxylate ester is further introduced, the mass percentage B% of the non-fluorinated carboxylate ester is adjusted within the range of this application, the lithium-ion battery has a larger number of OCPD cycles at 25°C, indicating that the lithium-ion battery has good OCPD cycling performance. This is because the non-fluorinated carboxylate ester has relatively low viscosity, and further introducing the non-fluorinated carboxylate ester into the electrolyte and adjusting its mass percentage B% within the range of this application can alleviate the problem of high viscosity of the compound represented by formula (I), allow the electrolyte to have an appropriate viscosity, improve the wettability of the positive electrode interface and the negative electrode interface, and reduce polarization, thereby allowing the lithium-ion battery to have good OCPD cycling performance. In addition, the lithium-ion battery also has a high hot box pass rate at 135°C for 1 h, indicating that the lithium-ion battery has good safety performance.

The type of the non-fluorinated carboxylate ester typically affects the OCPD cycling performance and safety performance of the lithium-ion battery. From Example 1-3 and Examples 2-2, 2-4 to 2-5, it can be seen that when the electrolyte of the lithium-ion battery includes the compound represented by formula (I) and the cyclic carbonate, the non-fluorinated carboxylate ester is further introduced, and the non-fluorinated carboxylate ester within the range of this application is selected, the lithium-ion battery has a larger number of OCPD cycles at 25°C, indicating that the lithium-ion battery has good OCPD cycling performance. This is because the non-fluorinated carboxylate ester has relatively low viscosity, and further introducing the non-fluorinated carboxylate ester within the range of this application into the electrolyte can alleviate the problem of high viscosity of the compound represented by formula (I), allow the electrolyte to have an appropriate viscosity, improve the wettability of the positive electrode interface and the negative electrode interface, and reduce polarization, thereby allowing the lithium-ion battery to have good OCPD cycling performance. In addition, the lithium-ion battery also has a high hot box pass rate at 135°C for 1 h, indicating that the lithium-ion battery has good safety performance.

The mass percentage D% of the trinitrile compound typically affects the OCPD cycling performance and safety performance of the lithium-ion battery. From Example 1-3 and Examples 2-6 to 2-8, it can be seen that when the electrolyte of the lithium-ion battery includes the compound represented by formula (I) and the cyclic carbonate, the trinitrile compound is further introduced, and the mass percentage D% of the trinitrile compound is adjusted within the range of this application, the lithium-ion battery has a large number of OCPD cycles at 25°C, indicating that the lithium-ion battery has good OCPD cycling performance. This is because the trinitrile compound can stabilize the positive electrode interface, and further introducing the trinitrile compound into the electrolyte and adjusting its mass percentage D% within the range of this application can further enhance the stability of the positive electrode interface, thereby allowing the lithium-ion battery to have good OCPD cycling performance. In addition, the lithium-ion battery also has a high hot box pass rate at 135°C for 1 h, indicating that the lithium-ion battery has good safety performance.

From Example 1-3 and Examples 2-9 to 2-11, it can be seen that when the electrolyte of the lithium-ion battery includes the compound represented by formula (I) and the cyclic carbonate, and the non-fluorinated carboxylate ester and the trinitrile compound are further introduced, the lithium-ion battery has a larger number of OCPD cycles at 25°C, indicating that the lithium-ion battery has good OCPD cycling performance. The compound represented by formula (I) has good compatibility and additive effects with the cyclic carbonate, the non-fluorinated carboxylate ester, and the trinitrile compound. The combination of the above substances applied to the lithium-ion battery is more conducive to allowing the lithium-ion battery to have good OCPD cycling performance. In addition, the lithium-ion battery also has a high hot box pass rate at 135°C for 1 h, indicating that the lithium-ion battery has good safety performance.

The type of the trinitrile compound typically affects the OCPD cycling performance of the lithium-ion battery. From Examples 2-10 and 2-12, it can be seen that when the lithium-ion battery includes the trinitrile compound within the range of this application, the lithium-ion battery has a large number of OCPD cycles at 25°C, indicating that the lithium-ion battery has good OCPD cycling performance. This is because the trinitrile compound can stabilize the positive electrode interface, and further introducing the trinitrile compound within the range of this application into the electrolyte can further enhance the stability of the positive electrode interface, thereby allowing the lithium-ion battery to have good OCPD cycling performance. In addition, the lithium-ion battery also has a high hot box pass rate at 135°C for 1 h, indicating that the lithium-ion battery has good safety performance.

From Example 1-3, Example 2-3, and Example 2-13, it can be seen that when the electrolyte of the lithium-ion battery includes the compound represented by formula (I) and the non-fluorinated carboxylate ester but does not include the cyclic carbonate, the lithium-ion battery has a large number of OCPD cycles at 25°C, indicating that the lithium-ion battery has good OCPD cycling performance. In addition, the lithium-ion battery also has a high hot box pass rate at 135°C for 1 h, indicating that the lithium-ion battery has good safety performance.

**Table 3**

| | Porosity of separator (%) | Inorganic particles | Fluorine-containing binder | m | OCPD cycles at 25°C (cycle) | Hot box pass rate at 135°C for 1 h |
|---|---|---|---|---|---|---|
| Example 1-3 | 30 | Magnesium hydroxide | Polyvinylidene fluoride | 1.5 | 800 | 8/10 |
| Example 3-1 | 28 | Magnesium hydroxide | Polyvinylidene fluoride | 1 | 780 | 8/10 |
| Example 3-2 | 32 | Magnesium hydroxide | Polyvinylidene fluoride | 2 | 820 | 8/10 |
| Example 3-3 | 31 | Aluminum oxide | Polyvinylidene fluoride | 1.5 | 810 | 7/10 |
| Example 3-4 | 29 | Magnesium hydroxide | Polyvinylidene fluoride-hexafluoropropylene copolymer (mass ratio of vinylidene fluoride to hexafluoropropylene is 1:1) | 1.5 | 790 | 8/10 |

| | | | | | | |
|---|---|---|---|---|---|---|
| Note: Taking the data of the hot box pass rate at 135°C for 1 h of Example 1-3 in Table 3 as an example, 8/10 means that 8 lithium-ion batteries of 10 lithium-ion batteries passed the hot box test, and the other examples can be understood similarly. | | | | | | |

The mass ratio m of the inorganic particles to the fluorine-containing binder typically affects the OCPD cycling performance and safety performance of the lithium-ion battery. From Example 1-3 and Examples 3-1 and 3-2, it can be seen that when m is within the range of this application, the lithium-ion battery has a large number of OCPD cycles at 25°C, indicating that the lithium-ion battery has good OCPD cycling performance. This is because the compound represented by formula (I) in the electrolyte has relatively high viscosity, resulting in poor wettability of the electrode sheet by the electrolyte, while the fluorine-containing binder in the porous coating can improve the affinity of the electrode sheet for the electrolyte and improve the wettability of the electrode sheet by the electrolyte, thereby allowing the lithium-ion battery to have good OCPD cycling performance. In addition, the lithium-ion battery also has a high hot box pass rate at 135°C for 1 h, indicating that the lithium-ion battery has good safety performance.

The type of the inorganic particles typically affects the OCPD cycling performance and safety performance of the lithium-ion battery. From Example 1-3 and Example 3-3, it can be seen that when the type of the inorganic particles is within the range of this application, the lithium-ion battery has a large number of OCPD cycles at 25°C, indicating that the lithium-ion battery has good OCPD cycling performance. In addition, the lithium-ion battery also has a high hot box pass rate at 135°C for 1 h, indicating that the lithium-ion battery has good safety performance.

The type of the fluorine-containing binder typically affects the OCPD cycling performance and safety performance of the lithium-ion battery. From Example 1-3 and Example 3-4, it can be seen that when the type of the fluorine-containing binder is within the range of this application, the lithium-ion battery has a large number of OCPD cycles at 25°C, indicating that the lithium-ion battery has good OCPD cycling performance. In addition, the lithium-ion battery also has a high hot box pass rate at 135°C for 1 h, indicating that the lithium-ion battery has good safety performance.

It should be noted that the terms "include", "contain", or any other variants thereof are intended to encompass non-exclusive inclusion, so that a process, method, or article that includes a series of elements includes not only those elements but also other elements not explicitly listed, or elements inherent to such process, method, or article.

The various embodiments in this specification are described in a related manner, and the same or similar parts between the various embodiments may refer to each other, and each embodiment focuses on the differences from other embodiments.

The above are only preferred embodiments of this application and are not intended to limit this application. Any modifications, equivalent replacements, improvements, and the like made within the spirit and principles of this application shall be included within the protection scope of this application.

## Claims

1. An electrochemical apparatus, comprising an electrolyte, a separator, a positive electrode sheet, and a negative electrode sheet, wherein
the electrolyte comprises a compound represented by formula (I): 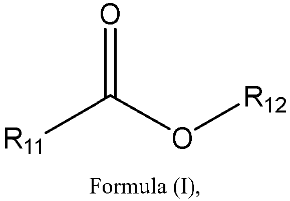
wherein R₁₁ and R₁₂ are each independently selected from a fluorine-substituted or unsubstituted C₁ to C₁₀ alkyl, and at least one of R₁₁ or R₁₂ is fluorine-substituted;
based on a mass of the electrolyte, a mass percentage of the compound represented by formula (I) is A%, and 30 ≤ A ≤ 80; and
the separator comprises a porous substrate and a porous coating disposed on at least one side of the porous substrate, and a porosity of the separator is 25% to 35%.

2. The electrochemical apparatus according to claim 1, wherein 40 ≤ A ≤ 75.

3. The electrochemical apparatus according to claim 1, wherein the porosity of the separator is 25% to 30%.

4. The electrochemical apparatus according to claim 1, wherein the compound represented by formula (I) comprises at least one of the following compounds:

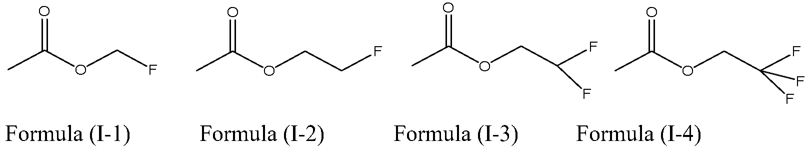

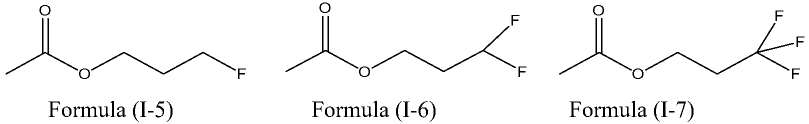

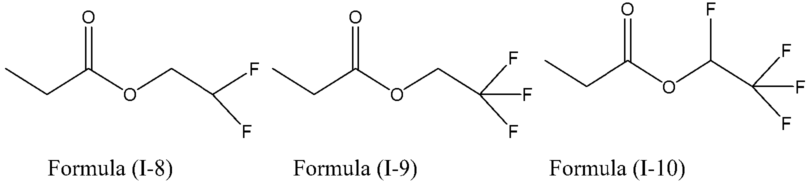

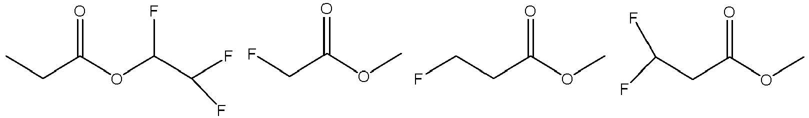

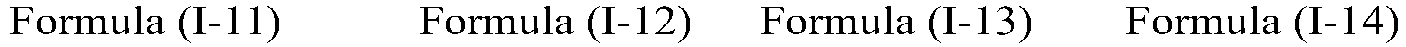

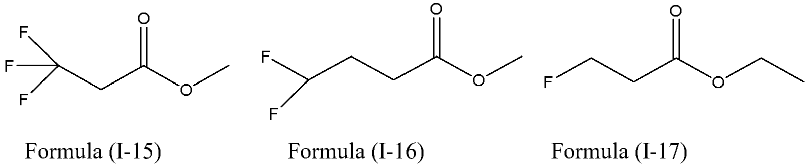

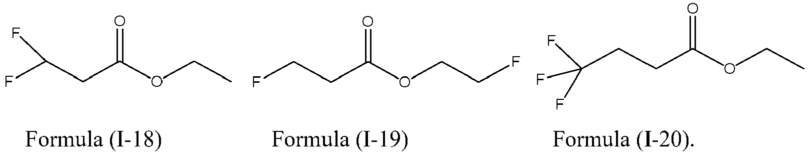

5. The electrochemical apparatus according to any one of claims 1 to 4, wherein the electrolyte comprises a non-fluorinated carboxylate ester, wherein the non-fluorinated carboxylate ester comprises at least one of methyl formate, ethyl formate, methyl acetate, ethyl acetate, propyl acetate, methyl propionate, ethyl propionate, or propyl propionate; and
based on the mass of the electrolyte, a mass percentage of the non-fluorinated carboxylate ester is B%, and 10 ≤ B ≤ 60.

6. The electrochemical apparatus according to any one of claims 1 to 4, wherein the electrolyte comprises a cyclic carbonate, wherein the cyclic carbonate comprises at least one of ethylene carbonate, propylene carbonate, butylene carbonate, or vinylethylene carbonate; and
based on the mass of the electrolyte, a mass percentage of the cyclic carbonate is C%, and 0 ≤ C ≤ 10.

7. The electrochemical apparatus according to any one of claims 1 to 4, wherein the electrolyte comprises a trinitrile compound, wherein the trinitrile compound comprises at least one of 1,3,5-pentanetricarbonitrile, 1,2,3-propanetricarbonitrile, 1,3,6-hexanetricarbonitrile, or 1,2,3-tris(2-cyanoethoxy)propane; and
based on the mass of the electrolyte, a mass percentage of the trinitrile compound is D%, and 1 ≤ D ≤ 3.

8. The electrochemical apparatus according to any one of claims 1 to 4, wherein a coating weight per unit of the porous coating is 0.1 mg/1540.25 mm² to 10 mg/1540.25 mm².

9. The electrochemical apparatus according to any one of claims 1 to 4, wherein the porous coating comprises inorganic particles and a fluorine-containing binder, and based on a mass of the porous coating, a mass ratio of the inorganic particles to the fluorine-containing binder is m, and 1 ≤ m ≤ 2.

10. The electrochemical apparatus according to claim 9, wherein the inorganic particles comprise at least one of magnesium hydroxide, boehmite, or aluminum oxide; and the fluorine-containing binder comprises a polyvinylidene fluoride-based binder, wherein the polyvinylidene fluoride-based binder comprises at least one of polyvinylidene fluoride or polyvinylidene fluoride-hexafluoropropylene copolymer.

11. The electrochemical apparatus according to claim 10, wherein the inorganic particles are magnesium hydroxide.

12. An electronic apparatus, comprising the electrochemical apparatus according to any one of claims 1 to 11.
